# EUROPÄISCHE PATENTANMELDUNG

(11) **EP 4 289 772 A1**
(43) Veröffentlichungstag der Anmeldung: **13.12.2023**
(21) Anmeldenummer: 23168333.5
(22) Anmeldetag: 17.04.2023
(51) Int. Cl.: B65G 47/82, H02K 41/03, B65G 54/02

(54) **PLANARE TRANSPORTVORRICHTUNG UND VERFAHREN ZUM BETRIEB EINER PLANAREN TRANSPORTVORRICHTUNG**

(30) Priorität: 03.05.2022 DE 102022110910
(71) Anmelder: Syntegon Technology GmbH, 71332 Waiblingen (DE)
(72) Erfinder: Schwarz, Sebastian, 91616 Neusitz (DE); Klauser, Matthias, 70499 Stuttgart (DE)
(74) Vertreter: DREISS Patentanwälte PartG mbB

(57) **Zusammenfassung**

Planare Transportvorrichtung (10) mit einer Antriebsfläche (12) und mit mindestens einer ersten Plattform (16), welche elektromagnetisch mit der Antriebsfläche koppelbar und parallel zu der Antriebsfläche bewegbar ist, wobei die planare Transportvorrichtung einen Nutzlastraum (24) zur Anordnung einer Nutzlast (26) aufweist, wobei die planare Transportvorrichtung ein relativ zu der ersten Plattform bewegbares Trägheitselement (30) aufweist, wobei das bewegbare Trägheitselement und der Nutzlastraum derart relativ zueinander ausgerichtet sind, dass bei einer Verzögerung der ersten Plattform durch Bewegung des Trägheitselements in einer Wirkrichtung relativ zu der ersten Plattform zumindest ein 15 Teil der Bewegungsenergie des Trägheitselements in den Nutzlastraum hinein übertragbar ist. Die Erfindung betrifft ferner ein Verfahren zum Betrieb einer planaren Transportvorrichtung.

## Beschreibung

Die Erfindung betrifft eine planare Transportvorrichtung mit einer Antriebsfläche und mit mindestens einer ersten Plattform, welche elektromagnetisch mit der Antriebsfläche koppelbar und parallel zu der Antriebsfläche bewegbar ist, wobei die planare Transportvorrichtung einen Nutzlastraum zur Anordnung einer Nutzlast aufweist.

Aus der WO 2020/ 243 814 A1 und der DE 10 2020 127 012 A1 sind planare Transportvorrichtungen mit elektromagnetisch gekoppelten Plattformen bekannt. Derartige Plattformen können bspw. als einfache und flexible Transportkörper für den Transport unterschiedlicher Nutzlasten eingesetzt werden und/oder Arbeitsvorrichtungen mit einem Arbeitswerkzeug aufweisen.

Um eine Nutzlast zu transportieren, wird diese in dem Nutzlastraum einer Plattform angeordnet und kann dann gemeinsam mit der Plattform über die Antriebsfläche hinweg bewegt werden. Ist die Plattform an einem Zielort innerhalb der Antriebsfläche angelangt, soll die Nutzlast von der Plattform entfernt werden können.

Zu diesem Zweck schlägt die WO 2020/ 243 814 A1 eine in Fig. 21 dargestellte Vorrichtung vor. Diese Vorrichtung umfasst eine erste Plattform mit einer zu entfernenden Nutzlast. Die Vorrichtung umfasst eine zweite Plattform mit einem Ansaugelement. Nach einer relativen Ausrichtung der beiden Plattformen wird das Ansaugelement mit der Nutzlast in Kontakt gebracht und mit Unterdruck beaufschlagt. Die Nutzlast wird dadurch an dem Ansaugelement gehalten und kann von der ersten Plattform entfernt werden. Da die Nutzlast und das Ansaugelement jeweils auf bewegbaren Plattformen angeordnet sind, ermöglicht diese Vorrichtung eine ortsunabhängige Entfernung der Nutzlast.

Nachteilig bei der vorgenannten Vorrichtung ist, dass für den Betrieb der Ansaugeinrichtung eine Energieversorgung zur Erzeugung des Unterdrucks sowie ein Leitungssystem für die Übertragung des Unterdrucks vorgehalten werden müssen, wodurch die Komplexität einer solchen Vorrichtung erhöht wird. Insbesondere wenn die Energieversorgung außerhalb der Antriebsfläche angeordnet ist, muss eine aufwendige Führung des Leitungssystems bereitgestellt werden, um das Ansaugelement an jedem Ort innerhalb der Antriebsfläche mit Unterdruck beaufschlagen zu können.

Eine weitere Möglichkeit, eine Nutzlast von einer Plattform zu entfernen, ist in Fig. 22 der WO 2020/ 243 814 A1 dargestellt. Bei dieser Vorrichtung ist die Ansaugeinrichtung nicht auf einer zweiten Plattform, sondern stationär angeordnet. Da die Energieversorgung der Ansaugeinrichtung in direkter Umgebung angeordnet werden kann, werden hierdurch die Anforderungen an das Leitungssystem reduziert. Allerdings ist es für eine Entfernung der Nutzlast erforderlich, die Plattform, welche die Nutzlast trägt, in den Wirkbereich der Ansaugeinrichtung zu verfahren. Eine ortsunabhängige Entfernung der Nutzlast ist also nicht möglich.

Nachteilig bei beiden vorstehend erläuterten Vorrichtungen der WO 2020/ 243 814 A1 ist außerdem, dass das Ansaugelement auf die Form und/oder Größe der Nutzlast abgestimmt sein muss.

Werden Nutzlasten mit unterschiedlichen Abmessungen oder Geometrien transportiert, muss das Ansaugelement in einem zusätzlichen Arbeitsschritt gewechselt werden, oder es werden mehrere Ansaugeinrichtungen mit unterschiedlichen Ansaugelementen benötigt.

Hiervon ausgehend liegt der Erfindung die Aufgabe zugrunde, eine Vorrichtung und ein Verfahren anzugeben, welche eine einfache und ortsunabhängige Entfernung einer Vielzahl unterschiedlicher Nutzlasten von einer Plattform ermöglichen.

Diese Aufgabe wird bei einer planaren Transportvorrichtung der eingangs genannten Art dadurch gelöst, dass die planare Transportvorrichtung ein relativ zu der ersten Plattform bewegbares Trägheitselement aufweist, wobei das bewegbare Trägheitselement und der Nutzlastraum derart relativ zueinander ausgerichtet sind, dass bei einer Verzögerung der ersten Plattform durch Bewegung des Trägheitselements in einer Wirkrichtung relativ zu der ersten Plattform zumindest ein Teil der Bewegungsenergie des Trägheitselements in den Nutzlastraum hinein übertragbar ist.

Durch die Anordnung des Trägheitselements auf der ersten Plattform ist es ohne Einschränkungen möglich, jede Position der Antriebsfläche zu erreichen und dort die Bewegungsenergie des Trägheitselements zumindest teilweise in den Nutzlastraum zu übertragen. Da außerdem die Auslenkung des Trägheitselements durch die Bewegung der Plattform gesteuert wird, kann eine immanente Funktion der Vorrichtung - nämlich die Bewegbarkeit der Plattformen - genutzt werden, wodurch eine einfach aufgebaute planare Transportvorrichtung bereitgestellt wird. Insbesondere kann dadurch auf einen zusätzlichen Aktor (bspw. auf eine Ansaugeinrichtung) verzichtet werden.

Bei Anordnung einer Nutzlast in dem Nutzlastraum wird bei einer Verzögerung der ersten Plattform die Bewegungsenergie des Trägheitselements teilweise auf die Nutzlast übertragen und diese - insbesondere der Wirkrichtung des Trägheitselements folgend - aus dem Nutzlastraum entfernt. Dabei ist es möglich Nutzlasten mit unterschiedlicher Form und/oder Größe und/oder unterschiedlichem Material aus dem Nutzlastraum zu entfernen.

Bei einer bevorzugten Ausführungsform weist die planare Transportvorrichtung eine Rückführeinrichtung auf, welche das Trägheitselement entgegen der Wirkrichtung beaufschlagt. Dadurch wird erreicht, dass das Trägheitselement nach erfolgter Auslenkung in seine ursprüngliche, nicht ausgelenkte Position zurückgeführt wird und für eine erneute Übertragung einer Bewegungsenergie verfügbar ist. Die Rückführeinrichtung kann bspw. als Federelement ausgebildet sein, welches sich an der ersten Plattform abstützt und mit dem Trägheitselement verbunden ist und entgegen der Wirkrichtung des Trägheitselements wirksam ist. Es versteht sich, dass eine solche Rückführeinrichtung nur eine relativ kleine Rückstellkraft bereitstellen muss; daher verkleinert die Rückführeinrichtung die für einen Abwurfvorgang nutzbare Bewegungsenergie des Trägheitselements nur geringfügig.

Besonders bevorzugt weist die erste Plattform eine erste Linearführung zur Führung des Trägheitselements oder eines Zwischenelements auf, welches zur Anordnung des Trägheitselements dient. Die Linearführung ermöglicht eine besonders einfache Vorgabe der Wirkrichtung des Trägheitselements. Insbesondere kann bei einer Ausrichtung der Bewegungsrichtung der Plattform parallel zu der Erstreckung der Linearführung ein maximaler Teil der Bewegungsenergie des Trägheitselements in den Nutzlastraum übertragen werden.

Ferner ist es bevorzugt, dass das Zwischenelement eine zweite Linearführung zur Führung des Trägheitselements aufweist. Durch die zweite Linearführung ist es möglich, die Wirkrichtung des Trägheitselements flexibler zu steuern. So ist beispielsweise eine Wirkrichtung des Trägheitselements einstellbar, welche sich jeweils anteilig aus der Richtung einer Bewegung des Zwischenelements entlang der ersten Linearführung und der Richtung einer Bewegung des Trägheitselements entlang der zweiten Linearführung zusammensetzt.

Eine bevorzugte Ausführungsform sieht vor, dass sich die erste Linearführung entlang einer ersten Führungsachse erstreckt, dass sich die zweite Linearführung entlang einer zweiten Führungsachse erstreckt, und dass die erste Führungsachse und die zweite Führungsachse zueinander senkrecht orientiert sind. Auf diese Weise wird eine einfache Möglichkeit bereitgestellt, einen maximalen Teil der Bewegungsenergie des Trägheitselements in den Nutzlastraum zu übertragen, und zwar wahlweise in eine von zwei zueinander senkrechten Richtungen.

Des Weiteren ist es bevorzugt, dass das Zwischenelement mittels einer Drehachse verdrehbar an der ersten Plattform gelagert ist. Durch die Drehachse kann die Wirkrichtung des Trägheitselements in den Nutzlastraum unabhängig von einer Ausrichtung, insbesondere einer Drehung, der Plattform gesteuert werden. Für den Fall, dass die Drehachse zu einem Schwerpunkt der ersten Plattform versetzt angeordnet ist, ist es auch möglich, die Drehlage des Zwischenelements durch eine Bewegung der ersten Plattform zu beeinflussen.

Insbesondere ist es bevorzugt, dass der Nutzlastraum der mindestens einen ersten Plattform zugeordnet ist. Dadurch sind das Trägheitselement sowie der Nutzlastraum gemeinsam durch die erste Plattform innerhalb der Antriebsfläche frei bewegbar und insbesondere ist der Übertrag zumindest eines Teils der Bewegungsenergie des Trägheitselements in den Nutzlastraum ortsunabhängig möglich.

Besonders bevorzugt ist es, dass das Trägheitselement zumindest in einem Ausgangszustand eine zumindest anteilige Begrenzung des Nutzlastraums bildet. Auf diese Weise wird eine korrekte Ausrichtung des Trägheitselements, des Nutzlastraums und einer in dem Nutzlastraum angeordneten Nutzlast sichergestellt. Durch die räumliche Nähe kann ein besonders großer Teil der Bewegungsenergie des Trägheitselements in den Nutzlastraum hinein und auf die Nutzlast übertragen werden. Eine in dem Nutzlastraum angeordnete Nutzlast wird bei einer Bewegung der Plattform durch das Trägheitselement abgestützt und insbesondere gegen ein ungewolltes Verrutschen aus dem Nutzlastraum heraus gesichert.

Eine bevorzugte Ausführungsform sieht vor, dass der Nutzlastraum einer zweiten Plattform zugeordnet ist, welche elektromagnetisch mit der Antriebsfläche koppelbar und parallel zu der Antriebsfläche bewegbar ist. Durch die Zuordnung des Nutzlastraum auf die zweite Plattform können der Transport und das Entfernen der Nutzlast getrennt voneinander realisiert werden. So ist es denkbar, den Transport verschiedener Nutzlasten durch zweite Plattformen zu realisieren, welche kein Trägheitselement aufweisen, wobei das Entfernen der Nutzlast durch eine erste Plattform realisiert wird, welche ein Trägheitselement aufweist.

Ferner ist es bevorzugt, dass das Trägheitselement einen sich in Wirkrichtung erstreckenden Verlängerungsabschnitt aufweist, der sich zumindest in einem ausgelenkten Zustand des Trägheitselements über die erste Plattform hinaus erstreckt. Hierdurch lässt sich ein Teil der Bewegungsenergie des Trägheitselements auf einen Nutzlastbereich außerhalb der ersten Plattform und insbesondere auf einen der zweiten Plattform zugeordneten Nutzlastbereich übertragen.

Die Erfindung betrifft ferner ein Verfahren zum Betrieb einer vorstehend erläuterten planaren Transportvorrichtung. Es ist vorgesehen, dass in dem Nutzlastraum eine Nutzlast angeordnet wird, wobei das bewegbare Trägheitselement und der Nutzlastraum derart relativ zueinander ausgerichtet sind und/oder ausgerichtet werden, dass bei einer Verzögerung der Plattform durch Bewegung des Trägheitselements relativ zu der Plattform zumindest ein Teil der Bewegungsenergie des Trägheitselements in den Nutzlastraum hinein und auf die Nutzlast übertragen wird.

Das Verfahren ermöglicht den Transport und das Entfernen der Nutzlast aus dem Nutzlastraum an frei wählbaren Positionen der Antriebsfläche. Durch die Übertragung der Bewegungsenergie auf die Nutzlast wird diese beschleunigt und aus dem Nutzlastraum durch Abwurf entfernt. Die Übertragung der Bewegungsenergie auf die Nutzlast kann dabei durch die Bewegung der Plattform selbst gesteuert werden. Weitere Vorteile und Merkmale des erfindungsgemäßen Verfahrens sind vorstehend unter Bezugnahme auf Vorteile und Merkmale der erfindungsgemäßen Vorrichtung erläutert, auf die hiermit Bezug genommen wird.

Des Weiteren betrifft die Erfindung ein Verfahren zum Betrieb einer planaren Transportvorrichtung, wobei sich bei einer Bewegung der Plattform in einer x-Richtung der Antriebsfläche und anschließender Verzögerung der Plattform das Trägheitselement relativ zu dem Zwischenelement bewegt und wobei sich bei einer Bewegung der Plattform in zu der x-Richtung der Antriebsfläche senkrechten y-Richtung der Antriebsfläche und anschließender Verzögerung der Plattform das Trägheitselement gemeinsam mit dem Zwischenelement relativ zu der Plattform bewegt.

Durch die jeweils senkrecht zueinander orientierten Auslenkungen des Trägheitselements bzw. des Trägheitselements gemeinsam mit dem Zwischenelement kann auf einfache Art und Weise ein maximaler Teil der Bewegungsenergie des Trägheitselements in zwei senkrecht zueinander orientierten Richtungen auf den Nutzlastraum übertragen werden.

Weitere Merkmale und Vorteile sind Gegenstand der nachfolgenden Beschreibung und der zeichnerischen Darstellung von Ausführungsformen.

In der Zeichnung zeigt
- Fig. 1: eine perspektivische Ansicht einer Ausführungsform einer planaren Transportvorrichtung mit einer ersten Plattform und einer Nutzlast;
- Fig. 2: eine perspektivische Ansicht der ersten Plattform gemäß Fig. 1 in einem Ausgangszustand;
- Fig. 3: eine perspektivische Ansicht der Plattform gemäß Fig. 1 bei einem Abwurf der Nutzlast;
- Fig. 4: eine perspektivische Ansicht einer weiteren Ausführungsform einer ersten Plattform mit einem Zwischenelement und einer Nutzlast;
- Fig. 5: eine perspektivische Ansicht der Plattform gemäß Fig. 4 bei einem Abwurf der Nutzlast in x-Richtung;
- Fig. 6: eine perspektivische Ansicht der Plattform gemäß Fig. 4 in einem in y-Richtung ausgelenkten Zustand des Zwischenelements und der Nutzlast;
- Fig. 7: eine perspektivische Ansicht der Plattform gemäß Fig. 4 bei einem dem Zustand gemäß Fig. 6 folgenden Abwurf der Nutzlast;
- Fig. 8: eine perspektivische Ansicht einer weiteren Ausführungsform einer Plattform mit einem verdrehbar gelagertem Zwischenelement und einer Nutzlast;
- Fig. 9: eine perspektivische Ansicht der Plattform gemäß Fig. 8 mit einem verdrehten Zwischenelement;
- Fig. 10: eine perspektivische Ansicht der Plattform gemäß Fig. 8 bei einem dem Zustand gemäß Fig. 9 folgenden Abwurf der Nutzlast; und
- Fig. 11: eine perspektivische Ansicht einer weiteren Ausführungsform einer planaren Transportvorrichtung mit einer ersten Plattform und einer zweiten Plattform.

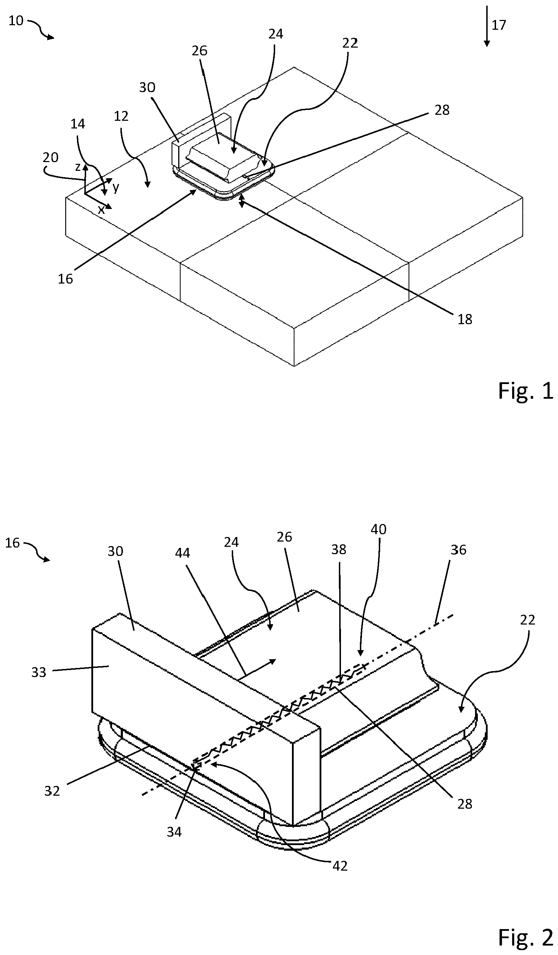

Eine planare Transportvorrichtung ist in der Zeichnung insgesamt mit dem Bezugszeichen 10 bezeichnet. Die planare Transportvorrichtung 10 umfasst eine Antriebsfläche 12, die eine gerade x-y-Ebene 14 definiert, auf welcher eine erste Plattform 16 angeordnet ist, vergleiche Fig. 1.

Die Antriebsfläche 12 ist insbesondere senkrecht zu der Schwerkraftrichtung 17 ausgerichtet.

Die erste Plattform 16 ist elektromagnetisch mit der Antriebsfläche 12 gekoppelt und auf der Antriebsfläche 12 bewegbar antreibbar. Optional ist auch ein Abstand 18 der ersten Plattform 16 zu der Antriebsfläche 12 einstellbar, sodass die erste Plattform 16 frei in einem Raum positionierbar ist, welcher also nicht nur durch die x-y-Ebene 14, sondern zusätzlich durch eine dazu senkrechte z-Achse 20 definiert ist.

Die erste Plattform 16 weist eine der Antriebsfläche 12 abgewandte Plattformseite 22 auf, welcher ein Nutzlastraum 24 zugeordnet ist. In dem Nutzlastraum 24 kann eine zu transportierende Nutzlast 26 angeordnet sein.

Die erste Plattform 16 umfasst außerdem eine erste Linearführung 28, die sich entlang der Plattformseite 22 erstreckt und in welcher ein Trägheitselement 30 bewegbar gelagert ist.

Die Nutzlast 26 und das Trägheitselement 30 können gemeinsam mit der ersten Plattform 16 bewegt werden. So ist es möglich, die Nutzlast 26 an frei wählbare Positionen der Antriebsfläche 12 zu transportieren.

Das Trägheitselement 30 ist insbesondere quaderförmig ausgebildet und in einem Ausgangszustand in räumlicher Nähe zu einer ersten Außenkante 32 der Plattformseite 22 angeordnet, vergleiche Fig. 2. Bevorzugt ist eine Längsseite 33 des Trägheitselements 30 parallel zu der ersten Außenkante 32 der Plattformseite 22 orientiert. Auf diese Weise bildet das Trägheitselement 30 eine Begrenzung des Nutzlastraums 24.

Das Trägheitselement 30 weist einen Nutenstein 34 auf oder ist mit einem Nutenstein 34 verbunden. Der Nutenstein 34 ist in der ersten Linearführung 28 der ersten Plattform 16 geführt ist und - gemeinsam mit dem Trägheitselement 30 entlang einer ersten Führungsachse 36 der ersten Linearführung 28 bewegbar. Bevorzugt ist die Reibung an den Kontaktflächen zwischen dem Nutenstein 34 und einer Wandung der ersten Linearführung 28 minimiert. Dies kann bspw. durch die Auswahl von Materialen mit einem niedrigen Reibungskoeffizienten und/oder durch eine Oberflächenbehandlung, bspw. eine reibungsminderte Beschichtung der Oberflächen, erreicht werden.

In einem Freiraum der ersten Linearführung 28 ist außerdem eine Rückführeinrichtung 38 angeordnet, welche bspw. als Feder ausgebildet ist. Die Feder ist an einem ersten Ende 40 der ersten Linearführung 28 an der ersten Plattform 16 abgestützt und an einem zweiten Ende 42 der ersten Linearführung 28 mit dem Trägheitselement 30 verbunden.

Bewegt sich die erste Plattform 16 mit einer konstanten Geschwindigkeit, verharrt das Trägheitselement 30 in einem Ausgangszustand im Bereich der ersten Außenkante 32.

Wird die erste Plattform 16 ausgehend von einem Bewegungszustand verzögert oder abgebremst, behält das Trägheitselement 30, aufgrund seiner trägen Masse, einen Teil seiner Bewegungsenergie bei und wird entlang der ersten Linearführung 28 ausgelenkt. Dabei bewegt sich das Trägheitselement 30 relativ zu der Plattformseite 22 und insbesondere relativ zu dem Nutzlastraum 24. Die Bewegungsrichtung des Trägheitselements 30 definiert dabei eine Wirkrichtung 44 des Trägheitselements 30.

Bewegt sich die erste Plattform 16 während des Abbremsens in Richtung der ersten Führungsachse 36 der ersten Linearführung 28, stimmen die Bewegungsrichtung und die Wirkrichtung 44 des Trägheitselements 30 überein. Es ist aber auch denkbar, dass die Bewegungsrichtung der ersten Plattform 16 und die Führungsachse 36 der ersten Linearführung 28 einen Winkel einschließen, der kleiner als 90° beträgt. Die Wirkrichtung 44 des Trägheitselements 30 weicht dann um diesen Winkel von der Bewegungsrichtung der ersten Plattform 16 ab.

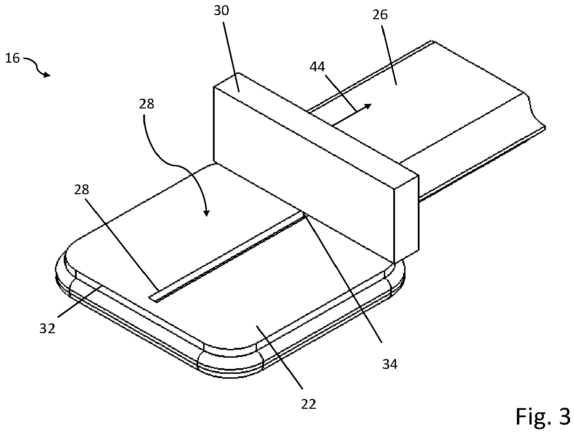

Durch die Auslenkung des Trägheitselements 30 relativ zu dem Nutzlastraum 24 wird ein Teil der Bewegungsenergie des Trägheitselements 30 in den Nutzlastraum 24 übertragen. Ist in dem Nutzlastraum 24 eine Nutzlast 26 angeordnet, wird diese Nutzlast 26 durch die Übertragung eines Teils der Bewegungsenergie des Trägheitselements 30 auf die Nutzlast 26 in Wirkrichtung 44 beschleunigt und durch Abwurf aus dem Nutzlastraum 24 von der ersten Plattform 16 entfernt, vergleiche Fig. 3.

Die Auslenkung des Trägheitselements 30 geht mit einem Spannen der Rückführeinrichtung 38 einher. Dabei wird ein weiterer Teil der Bewegungsenergie des Trägheitselements 30 von der Rückführeinrichtung 38 aufgenommen und kurzzeitig als Spannenergie gespeichert. Die gespannte Rückführeinrichtung 38 beaufschlagt das Trägheitselement 30 mit einer Rückstellkraft, welche entgegen der Wirkrichtung 44 des Trägheitselements 30 wirksam ist. Durch die Rückstellkraft der Rückführeinrichtung 38 wird das Trägheitselement 30 in seinen nicht ausgelenkten Ausgangszustand zurücküberführt. In dem Nutzlastraum 24 kann dann eine neue Nutzlast angeordnet werden.

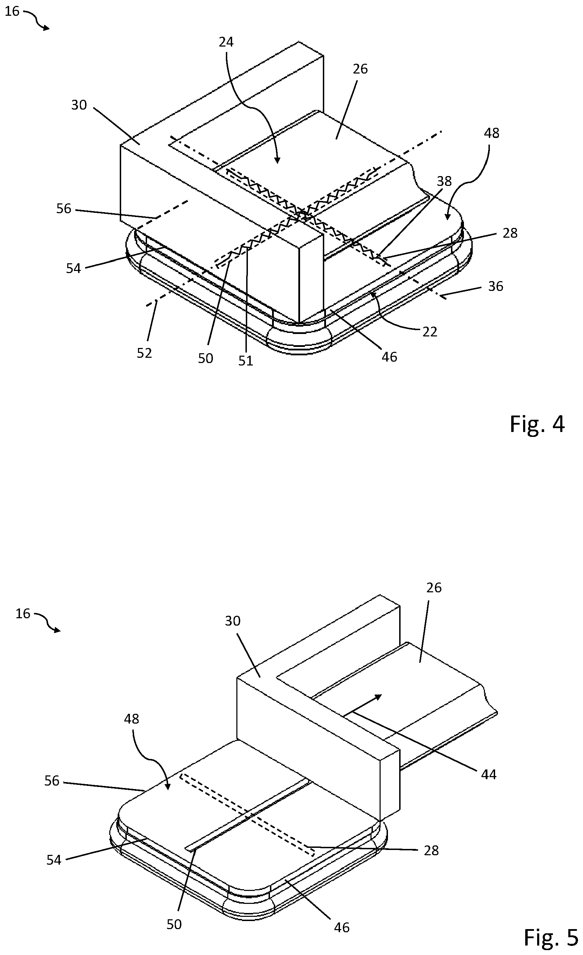

In Fig. 4 ist eine weitere Ausführungsform einer planaren Transportvorrichtung 10 dargestellt. Die erste Plattform 16 weist ein flächiges Zwischenelement 46 auf, das zwischen der Plattformseite 22 und dem Trägheitselement 30 angeordnet ist. Das Zwischenelement 46 erstreckt sich dabei parallel zu der Plattformseite 22.

Das Zwischenelement 46 weist eine der Antriebsfläche 12 abgewandte Zwischenelementseite 48 auf, welcher ein Nutzlastraum 24 zugeordnet ist. In dem Nutzlastraum 24 kann eine zu transportierende Nutzlast 26 angeordnet sein.

Das Zwischenelement 46 ist in der ersten Linearführung 28 der ersten Plattform 16 gelagert und relativ zu der Plattformseite 22 bewegbar.

Das Zwischenelement 46 umfasst eine zweite Linearführung 50 mit einer zweiten Führungsachse 52. In der zweiten Linearführung 50 des Zwischenelements 46 ist das Trägheitselement 30 bewegbar gelagert. Die erste Führungsachse 36 der ersten Linearführung 28 und die zweite Führungsachse 52 der zweiten Linearführung 50 sind senkrecht zueinander ausgerichtet.

Die erste Linearführung 28 sowie die zweite Linearführung 50 umfassen jeweils eine Rückführeinrichtung 38 bzw. 51, bspw. jeweils eine Feder.

Das Trägheitselement 30 ist L-förmig ausgebildet und erstreckt sich entlang einer ersten Außenkante 54 und einer dazu angrenzenden zweiten Außenkante 56 der Zwischenelementseite 48. Die zweite Außenkante 56 ist in Fig. 4 schematisch angedeutet. Das L-förmige Trägheitselement 30 begrenzt den Nutzlastraum 24 auf zwei zueinander senkrechten Seiten.

Bei einer Bewegung der ersten Plattform 16 in Richtung der zweiten Führungsachse 52 und anschließender Verzögerung der Plattform 16 wird das Trägheitselement 30 entlang der zweiten Linearführung 50 ausgelenkt und bewegt sich relativ zu der Zwischenelementseite 48 und dem Nutzlastraum 24. Das Zwischenelement 46 verbleibt dabei in seiner Ausgangsposition, vergleiche Fig. 5.

Ist in dem Nutzlastraum 24 eine Nutzlast 26 angeordnet, wird ein Teil der Bewegungsenergie des Trägheitselements 30 auf die Nutzlast 26 übertragen. Die Nutzlast 26 wird dadurch in Wirkrichtung 44 beschleunigt und von der ersten Plattform 16 entfernt, vergleiche Fig. 5.

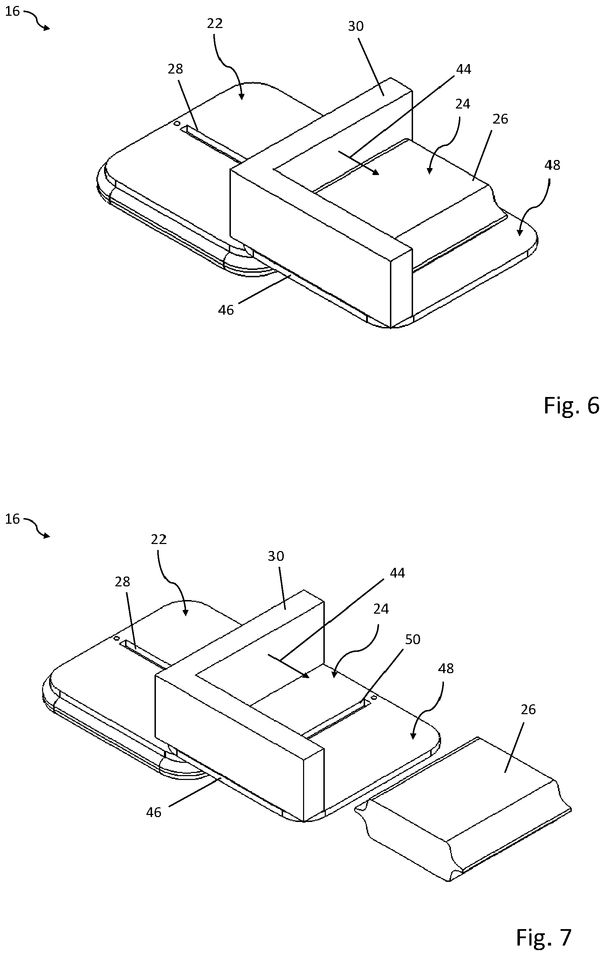

Bei einer Bewegung der ersten Plattform 16 in Richtung der ersten Führungsachse 36 und anschließender Verzögerung der ersten Plattform 16 werden das Trägheitselement 30 und das Zwischenelement 46 gemeinsam ausgelenkt, vergleiche Fig. 6.

Das Trägheitselement 30 und das Zwischenelement 46 bewegen sich dabei entlang der ersten Linearführung 28 relativ zu der Plattformseite 22 in Wirkrichtung 44. Die Nutzlast 26 bleibt bis zu der maximalen Auslenkung des Trägheitselements 30 und des Zwischenelements 46 in Kontakt mit der Zwischenelementseite 48.

Ist die maximale Auslenkung erreicht, bewegt sich die Nutzlast 26 relativ zu dem Trägheitselement 30 und dem Zwischenelement 46 weiter und wird von der Zwischenelementseite 48 und aus dem Nutzlastraum 24 durch Abwurf entfernt, vergleiche Fig. 7.

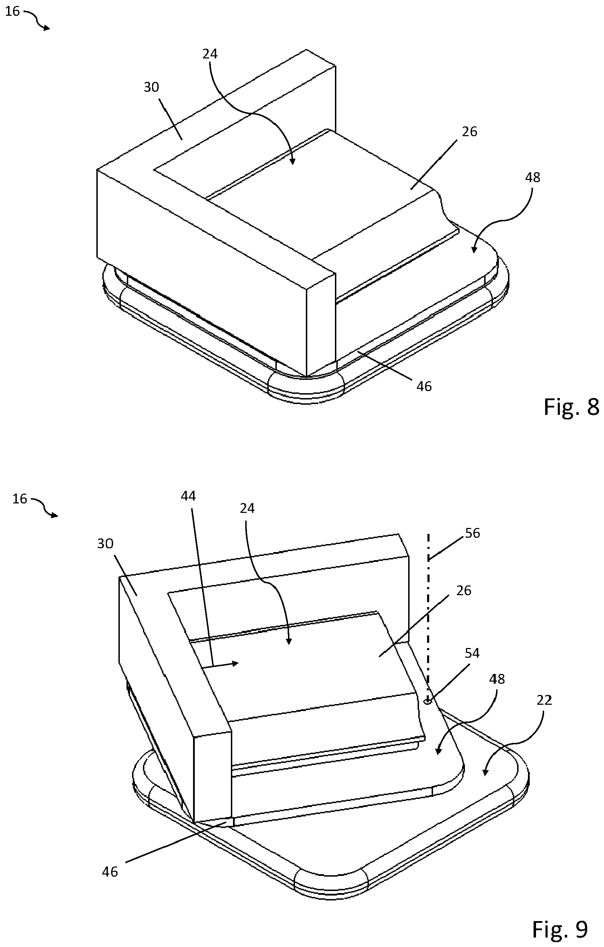

Die Figuren 8 bis 10 zeigen eine weitere Ausführungsform der planaren Transportvorrichtung 10, wobei an der ersten Plattform 16 ein Drehgelenk 54 angeordnet ist, mittels welchem das Zwischenelement 46 um eine Drehachse 56 drehbar an der Plattform 16 gelagert ist. Die Drehachse 56 ist insbesondere senkrecht zu der Zwischenelementseite 48 orientiert. Ferner ist es bevorzugt, dass die Drehachse 56 seitlich versetzt zu einem Schwerpunkt der ersten Plattform 16 angeordnet ist.

Das Zwischenelement 46 umfasst eine bereits vorstehend unter Bezugnahme auf Fig. 4 bis 7 erläuterte zweite Linearführung 50, in welcher das Trägheitselement 30 bewegbar gelagert ist.

Das Drehgelenk 54 ermöglicht eine Ausrichtung des Zwischenelements 46 um die Drehachse 56 unabhängig von der Ausrichtung der ersten Plattform 16 um eine z-Achse 20. Insbesondere ist eine Orientierung der Linearführung 50 einstellbar. Auf diese Weise kann die Orientierung der Wirkrichtung 44 des Trägheitselements 30 unabhängig von der Ausrichtung der ersten Plattform 16 vorgegeben werden, vergleiche Fig. 9.

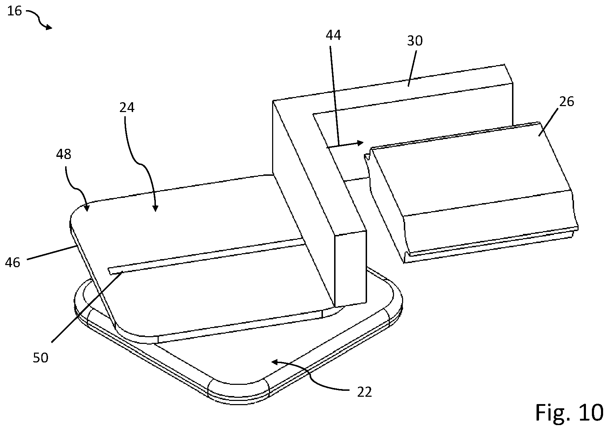

Bewegt sich die erste Plattform 16 auf der Antriebsfläche 12 und wird anschließend verzögert, bewegt sich das Trägheitselement 30 relativ zu dem Zwischenelement 46 und dem Nutzlastraum 24. Dabei wird ein Teil der Bewegungsenergie des Trägheitselements 30 in vorstehend bereits erörterter Weise auf die Nutzlast 26 übertragen und diese aus dem Nutzlastraum 24 entfernt, vergleiche Fig. 10.

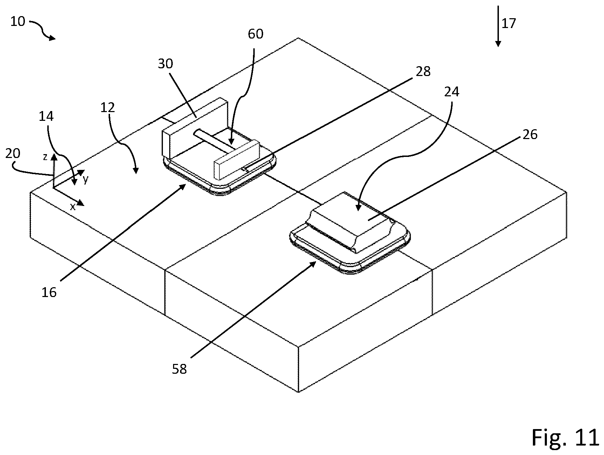

In Fig. 11 ist eine weitere Ausführungsform einer planaren Transportvorrichtung 10 dargestellt. Die planare Transportvorrichtung 10 umfasst eine erste Plattform 16 und eine zweite Plattform 58. Beide Plattformen 16 und 58 sind elektromagnetisch mit der Antriebsfläche 12 gekoppelt und unabhängig voneinander in der x-y-Ebene 14 bewegbar.

Abweichend von den vorstehend beschriebenen Ausführungsformen ist ein Nutzlastraum 24 nicht der ersten Plattform 16, sondern der zweiten Plattform 58 zugeordnet. In dem Nutzlastraum 24 kann die Nutzlast 26 angeordnet und von der zweiten Plattform 58 transportiert werden.

Die erste Plattform 16 umfasst das Trägheitselement 30, welches bewegbar in der ersten Linearführung 28 gelagert ist. Das Trägheitselement 30 weist einen Verlängerungsabschnitt 60 auf, wobei sich der Verlängerungsabschnitt 60 insbesondere entlang und/oder parallel zu der ersten Führungsachse 36 der ersten Linearführung 28 erstreckt.

Bei einer trägheitsbedingten Auslenkung des Trägheitselements 30 erstreckt sich der Verlängerungsabschnitt 60 des Trägheitselements 30 über die erste Plattform 16 hinweg und überträgt zumindest einen Teil der Bewegungsenergie des Trägheitselements 30 in den Nutzlastraum 24 der zweiten Plattform 58, sodass eine dort angeordnete Nutzlast 26 aus dem Nutzlastraum abgeworfen werden kann.

## Patentansprüche

1. Planare Transportvorrichtung (10) mit einer Antriebsfläche (12) und mit mindestens einer ersten Plattform (16), welche elektromagnetisch mit der Antriebsfläche (12) koppelbar und parallel zu der Antriebsfläche (12) bewegbar ist, wobei die planare Transportvorrichtung (10) einen Nutzlastraum (24) zur Anordnung einer Nutzlast (26) aufweist, **dadurch gekennzeichnet, dass** die planare Transportvorrichtung (10) ein relativ zu der ersten Plattform (16) bewegbares Trägheitselement (30) aufweist, wobei das bewegbare Trägheitselement (30) und der Nutzlastraum (24) derart relativ zueinander ausgerichtet sind, dass bei einer Verzögerung der ersten Plattform (16) durch Bewegung des Trägheitselements (30) in einer Wirkrichtung (44) relativ zu der ersten Plattform (16) zumindest ein Teil der Bewegungsenergie des Trägheitselements (30) in den Nutzlastraum (24) hinein übertragbar ist.

2. Planare Transportvorrichtung (10) nach Anspruch 1, **dadurch gekennzeichnet, dass** die planare Transportvorrichtung (10) eine Rückführeinrichtung (38) aufweist, welche das Trägheitselement (30) entgegen der Wirkrichtung (44) beaufschlagt.

3. Planare Transportvorrichtung (10) nach einem der vorstehenden Ansprüche, **dadurch gekennzeichnet, dass** die erste Plattform (16) eine erste Linearführung (28) zur Führung des Trägheitselements (30) oder eines Zwischenelements (46) aufweist, welches zur Anordnung des Trägheitselements (30) dient.

4. Planare Transportvorrichtung (10) nach Anspruch 3, **dadurch gekennzeichnet, dass** das Zwischenelement (46) eine zweite Linearführung (50) zur Führung des Trägheitselements (30) aufweist.

5. Planare Transportvorrichtung (10) nach Anspruch 4, **dadurch gekennzeichnet, dass** sich die erste Linearführung (28) entlang einer ersten Führungsachse (36) erstreckt, dass sich die zweite Linearführung (50) entlang einer zweiten Führungsachse (52) erstreckt, und dass die erste Führungsachse (36) und die zweite Führungsachse (52) zueinander senkrecht orientiert sind.

6. Planare Transportvorrichtung (10) nach einem der Ansprüche 3 bis 5, **dadurch gekennzeichnet, dass** das Zwischenelement (46) mittels einer Drehachse (56) verdrehbar an der ersten Plattform (16) gelagert ist.

7. Planare Transportvorrichtung (10) nach einem der vorstehenden Ansprüche, **dadurch gekennzeichnet, dass** der Nutzlastraum (24) der mindestens einen ersten Plattform (16) zugeordnet ist.

8. Planare Transportvorrichtung (10) nach Anspruch 7, **dadurch gekennzeichnet, dass** das Trägheitselement (30) zumindest in einem Ausgangszustand eine zumindest anteilige Begrenzung des Nutzlastraums (24) bildet.

9. Planare Transportvorrichtung (10) nach Anspruch 1 bis 6, **dadurch gekennzeichnet, dass** der Nutzlastraum (24) einer zweiten Plattform (58) zugeordnet ist, welche elektromagnetisch mit der Antriebsfläche (12) koppelbar und parallel zu der Antriebsfläche (12) bewegbar ist.

10. Planare Transportvorrichtung (10) nach Anspruch 9, **dadurch gekennzeichnet, dass** das Trägheitselement (30) einen sich in Wirkrichtung (44) erstreckenden Verlängerungsabschnitt (60) aufweist, der sich zumindest in einem ausgelenkten Zustand des Trägheitselements (30) über die erste Plattform (16) hinaus erstreckt.

11. Verfahren zum Betrieb einer planaren Transportvorrichtung (10) nach einem der vorstehenden Ansprüche, wobei in dem Nutzlastraum (24) eine Nutzlast (26) angeordnet wird, wobei das bewegbare Trägheitselement (30) und der Nutzlastraum (24) derart relativ zueinander ausgerichtet sind und/oder ausgerichtet werden, dass bei einer Verzögerung der Plattform (16) durch Bewegung des Trägheitselements (30) relativ zu der Plattform (16) zumindest ein Teil der Bewegungsenergie des Trägheitselements (30) in den Nutzlastraum (24) hinein und auf die Nutzlast (26) übertragen wird.

12. Verfahren nach Anspruch 11 unter Verwendung einer planaren Transportvorrichtung (10) nach Anspruch 5, wobei sich bei einer Bewegung der Plattform (16) in einer x-Richtung der Antriebsfläche (12) und anschließender Verzögerung der Plattform (16) das Trägheitselement (30) relativ zu dem Zwischenelement (46) bewegt und wobei sich bei einer Bewegung der Plattform (16) in zu der x-Richtung der Antriebsfläche (12) senkrechten y-Richtung der Antriebsfläche (12) und anschließender Verzögerung der Plattform (16) das Trägheitselement (30) gemeinsam mit dem Zwischenelement (46) relativ zu der Plattform (16) bewegt.
